# EUROPEAN PATENT APPLICATION

(11) **EP 4 775 409 A1**
(43) Date of publication of application: **15.07.2026**
(21) Application number: 26150322.1
(22) Date of filing: 06.01.2026
(51) Int. Cl.: B60B 31/00, B60B 31/02

(54) **A SPOKE PLACEMENT APPARATUS AND METHOD FOR CONNECTING A SPOKE WITH A RIM OF A WHEEL, FOR INSTANCE A BICYCLE- OR MOTOR WHEEL**

(30) Priority: 09.01.2025 NL 2039563
(71) Applicant: Holland Mechanics B.V., 1442 PZ Purmerend (NL)
(72) Inventor: VAN BRUMMELEN, Marinus Johannes, 1442 PZ Purmerend (NL); ATEMA, Nelson, 1442 PZ Purmerend (NL)
(74) Representative: van Breda, Jacobus

(57) **Abstract**

A spoke placement apparatus (1), comprising a rim handling device for handling a horizontally oriented rim of a wheel, for instance a bicycle- or motor wheel, and at least one screwdriver for screwing a nipple onto a selected spoke to be placed into and through a selected spoke hole of the rim so as to fasten the spoke to the rim, wherein the spoke placement apparatus comprises a measurement organ for measuring a height position of the rim and comprising a control organ receiving a height position signal from the measurement organ for aligning the rim and the at least one screwdriver with reference to each other.

## Description

The invention relates to a spoke placement apparatus, comprising a rim handling device for handling a horizontally oriented rim of a wheel, for instance a bicycle- or motor wheel, and at least one screwdriver for screwing a nipple onto a selected spoke to be placed into and through a selected spoke hole of the rim so as to fasten the spoke to the rim.

EP-A-0 561 459 discloses an apparatus for mounting spokes between a hub and rim of a spoke wheel comprises a hub support for rotatably supporting the hub and rim support rollers for supporting the rim concentrically around its axis. Motor driven rim rollers cause the rim to rotate about its axis. At least one rotatably driven, substantially radially directed screw driver is arranged for screwing nipples onto corresponding spokes through nipple holes in the rim. A CCD-camera and a measuring wheel are positioned near the screw driver for determining the position of the nipple holes in the rim. Control means serve to control the drive means such that each time a nipple hole in the rim is positioned in front of the screw driver. There is no disclosure of any height adjustment between screwdriver and holes in the rim, only aligning by rotational motion of the rim to get a nipple hole in front of the screwdriver.

EP-A-0 476 750 discloses an apparatus for mounting spokes between a hub and rim of a spoke wheel. Rim support rollers support the rim concentrically around the hub. A drive is provided for rotating the rim around the axis of the wheel. A rotatably drivable screw driver is adapted to screw nipples onto respective spokes through holes in the rim. By means of a CCD camera the positions of the holes in the rim are detected and a spoke support and the screw driver are adjustable to allow the screw driver and each set of nipple, spoke and nipple hole in the rim to be accurately aligned. The alignment as disclosed in this patent application EP-A-0 476 750 relates not only to the rotational motion of the rim to get a nipple hole in front of the screwdriver as is disclosed by EP-A-0 561 459, but also to compensate for differences in height between the nipple holes and the screwdriver or screwdrivers. However this compensation in height relates to aligning nipple holes and screwdriver(s) prior to initiating the placement of nipples onto any one of the spokes.

The not yet published European patent application EP-A-24208265 of the applicant describes a spoke positioning and placement apparatus, comprising a rim handling device for handling a rim of a bicycle wheel, and a spoke handling device for handling a spoke, which rim handling device and spoke handling device are arranged to execute a concerted operation for positioning a spoke or spokes with reference to the rim, and said apparatus comprising at least one screwdriver for screwing a nipple onto a selected spoke to be placed into and through a selected spoke hole of the rim so as to fasten the spoke to the rim.

The inventors have found that in the series of steps to complete a complete spoked wheel in which eventually all nipples are screwed onto corresponding spokes placed into and through selected spoke holes of the rim, the at least one screwdriver may repeatedly not be properly aligned with the concerning spoke holes because of the preceding tensioning of spokes on which nipples are already screwed, as a result of which the screwing of a nipple onto a subsequent spoke to connect such spoke to the rim, then fails. This happens particularly when a large amount of spokes is already connected to the rim of the wheel. In such a situation the rim loses its straightness and gets bended, which results in poor alignment of the at least one screwdriver with reference to the spoke holes in the rim.

The invention is therefore aimed to improve the spoke placement apparatus of EP-A-24208265, and in particular of the prior art disclosures EP-A-0 561 459 and EP-A-0 476 750, where it concerns improving and maintaining the accuracy of the at least one screwdriver operating to screw a series of nipples onto a series of selected spokes placed into and through the concerning spoke holes of the rim.

According to the invention a spoke placement apparatus as well as a method for connecting a series of spokes to a rim of a wheel, for instance a bicycle- or motor wheel are proposed in accordance with one or more of the appended claims.

In a first aspect of the invention the spoke placement apparatus which is provided by a measurement organ for measuring a height of the rim and comprising a control organ receiving a height position signal from the measurement organ for aligning the rim and the at least one screwdriver with reference to each other, is characterized in that after each individual spoke is fastened to the rim, the measurement organ and the control organ are repeatedly operational for measuring and aligning the height position of the rim and the at least one screwdriver with reference to each other for each and every subsequent spoke that is to be fastened to the rim. This enables to fasten a series of spokes to a rim of a wheel, for instance a bicycle- or motor wheel, so that it becomes a spoked wheel, comprising the steps of measuring the height position of the rim and positioning a selected spoke in front of and through a spoke hole of the rim, and screwing a nipple on the spoke which is placed into and through the selected spoke hole of the rim, in such way that for each individual spoke to be fastened to the rim, the height position of the rim with reference to the at least one screwdriver is measured, and said height position of the rim is adjusted so as to align the concerning spoke hole of the rim with reference to the at least one screwdriver, followed by screwing a nipple onto the spoke which is placed into and through the concerning spoke hole.

As a result the spoke tensions can be set at higher values without loss of accuracy caused by bending of the rim.

Although it is possible that the alignment occurs by adjusting the height position of the at least one screwdriver, it is preferred that the rim handling apparatus is up-and-down movable and that the control organ drives the rim handling apparatus to a height position consistent with the height level of the at least one screwdriver.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:

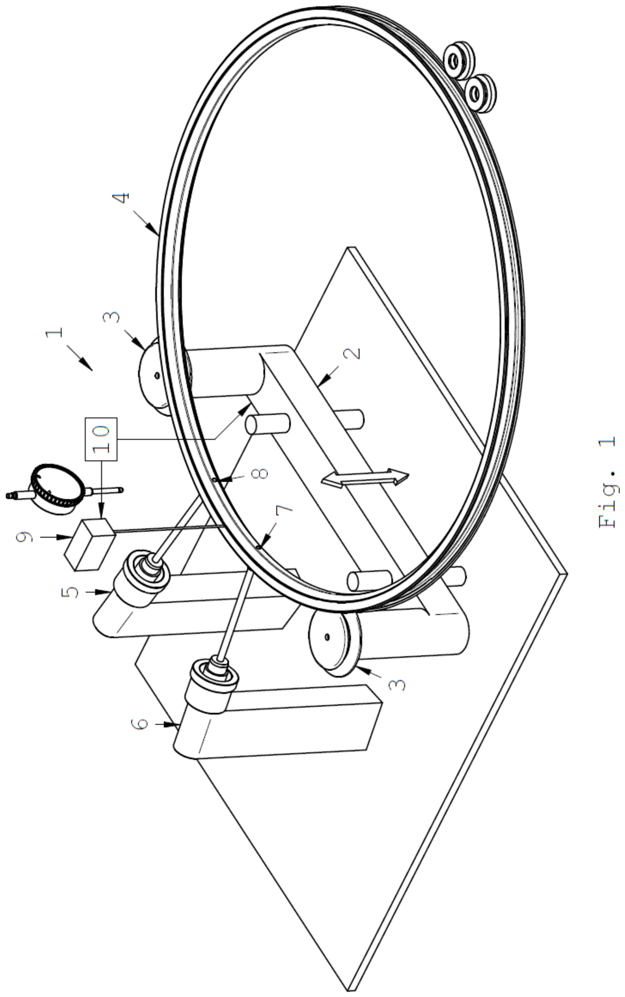

- figure 1 provides an isometric view at relevant parts of the apparatus of the invention,

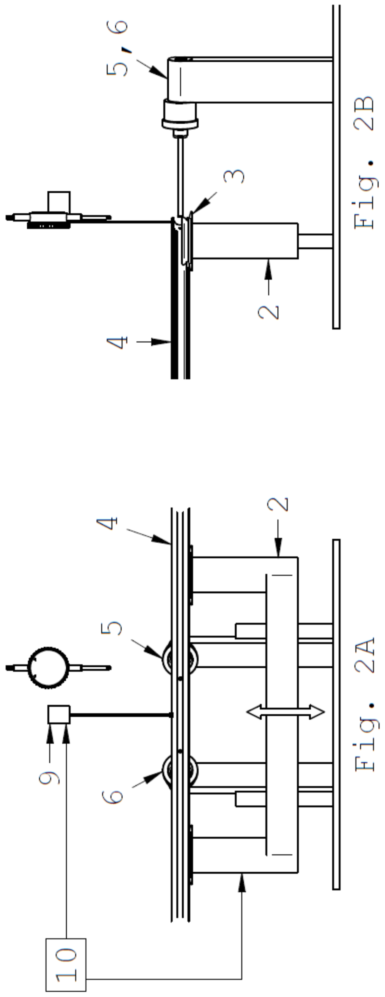

- figures 2A and 2B provide a frontal and side view respectively of the apparatus of figure 1 in an ideal situation without bending of the rim, and
- figures 3A and 3B provide a frontal and side view respectively of the apparatus of figure 1 with a bended rim.

Whenever in the figures the same reference numerals are applied, these numerals refer to the same parts.

The figures show a spoke placement apparatus 1 comprising a rim handling device 2 provided with driving wheels 3 for rotating a horizontally oriented rim 4 of a wheel, for instance a bicycle- or motor wheel. The apparatus further comprises at least one screwdriver 5, 6 for screwing a nipple onto a selected spoke to be placed into and through a selected spoke hole of the rim 4 so as to fasten the spoke to the rim 4. Since the skilled person and also every layman is perfectly knowledgeable with spokes and how they are connected with nipples to the rim of a wheel, for instance a bicycle- or motor wheel, it is superfluous to show these in the drawing to avoid compromising clarity. Rather the drawing is limited to what is relevant to understanding the invention.

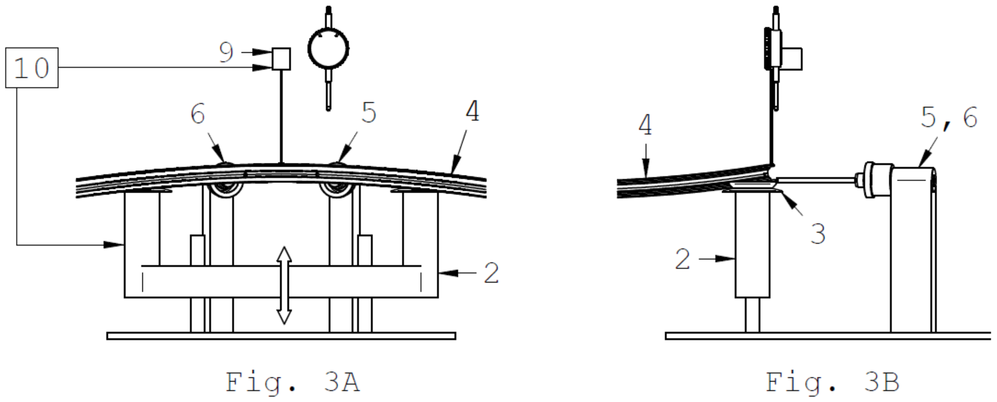

The problem of misalignment of the at least one screwdriver 5, 6 with reference to the spoke holes that the invention seeks to solve is illustrated particularly well in figure 3B, which shows the situation that the at least one screwdriver 5, 6 is not at the height position of the spoke holes of the rim 4 that are directly in front of the at least one screwdriver 5, 6.
This particularly applies to the situation that a misalignment has occurred due to earlier tensioning of spokes that already have been connected to the rim 4.

To address this problem of aligning the at least one screwdriver 5, 6 with reference to a selected spoke hole 7, 8 where a concerning subsequent spoke in a series of spokes is to be connected to the rim 4 by screwing a nipple on such spoke, the spoke placement apparatus 1 comprises a measurement organ 9, preferably a laser measurement organ, for measuring a height position of the rim 4. The measurement organ 9 is further connected to a control organ 10 receiving an actual height position signal from the measurement organ 9, and the control organ 10 uses this signal for aligning the rim 4 and the at least one screwdriver 5, 6 with reference to each other so that the subsequent spoke can be properly connected to the rim 4.

In order to enable the control organ 10 to take corrective action so as to align the at least one screwdriver 5, 6 and the concerning spoke hole 7, 8 of the rim 4, the rim handling apparatus 2 is up-and-down movable and the control organ 10 drives the rim handling apparatus 2 up or down to a height position consistent with the height level of the at least one screwdriver 5, 6.

It is important to note that the measurement organ 9 and the control organ 10 are operational for measuring and aligning the height position of the rim 4 and the at least one screwdriver 5, 6 with reference to each other repeatedly for each and every spoke that is to be fastened to the rim 4. Accordingly accuracy of operation of the apparatus 1 is vastly improved and the apparatus operates with improved screwdriver - spoke hole alignment and can produce wheels with higher spoke tensions than in the prior art.

Embodiments of the present invention can include every combination of features that are disclosed herein independently from each other. Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing method steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations.

## Claims

1. A spoke placement apparatus (1), comprising a rim handling device for handling a horizontally oriented rim of a wheel, for instance a bicycle- or motor wheel, and at least one screwdriver for screwing a nipple onto a selected spoke to be placed into and through a selected spoke hole of the rim so as to fasten the spoke to the rim, wherein the spoke placement apparatus comprises a measurement organ for measuring a height position of the rim and comprising a control organ receiving a height position signal from the measurement organ for aligning the rim and the at least one screwdriver with reference to each other, **characterized in that** after each individual spoke that is fastened to the rim, the measurement organ and the control organ are operational for measuring and aligning the height position of the rim and the at least one screwdriver with reference to each other for each and every following spoke that is to be fastened to the rim.

2. The spoke placement apparatus of claim 1, **characterized in that** the rim handling apparatus is up-and-down movable and the control organ drives the rim handling apparatus to a height position consistent with the height level of the at least one screwdriver.

3. Method for fastening a series of spokes to a rim of a wheel, for instance a bicycle- or motor wheel, comprising measuring the height position of the rim and positioning a selected spoke in front of and through a spoke hole of the rim, and screwing a nipple on the spoke which is placed into and through the selected spoke hole of the rim, **characterized in that** each time after fastening an individual spoke to the rim, and for each subsequent individual spoke to be fastened to the rim, the height position of the rim with reference to the at least one screwdriver is measured, and said height position of the rim is adjusted so as to align the concerning spoke hole of the rim with reference to the at least one screwdriver, followed by screwing a nipple onto the spoke which is placed into and through the concerning spoke hole.
